Europäisches Patentamt

European Patent Office

Office européen des brevets

(19)

(11) Veröffentlichungsnummer: **0 278 282**
**A2**

(12) **EUROPÄISCHE PATENTANMELDUNG**

(21) Anmeldenummer: **88100851.0**

(22) Anmeldetag: **21.01.88**

(51) Int. Cl.⁴: **B09B 5/00**

(30) Priorität: **09.02.87 DE 3703922**

(43) Veröffentlichungstag der Anmeldung:
**17.08.88 Patentblatt 88/33**

(84) Benannte Vertragsstaaten:
**AT BE CH FR GB IT LI NL**

(71) Anmelder: **ACCUMULATORENFABRIK
SONNENSCHEIN GMBH
Thiergarten Postfach 1180
D-6470 Büdingen 1 Oberhessen(DE)**

(72) Erfinder: **Wallbank, Peter
Drosselweg 3
D-6473 Gedern(DE)**
Erfinder: **Barckmann,Claus,Dipl.-Ing.
Am Lautenstein 2
D-6740 Büdingen(DE)**
Erfinder: **Piske, Günter Dipl.-Chem.,
Im Flachsgrund 14,
D-6470 Büdingen,(DE)**

(74) Vertreter: **Baumann, Eduard, Dipl.-Phys.
Postfach 1201 Sattlerstrasse 1
D-8011 Höhenkirchen/München(DE)**

(54) **Verfahren zum Entfernen von Schwermetallen aus Böden.**

(57) Die Erfindung bezieht sich auf ein Verfahren zum Entfernen von Schwermetallen wie Blei, Cadmium aus Böden. Derartige kontaminierte Böden werden derzeit häufig in Deponien galagert. Darüberhinaus ist die Beigabe eines Lösungsmittels und das anschließende Ausfällen der gelösten Schwermetalle aus einer neutralen oder basischen Lösung bekannt. Dies führt jedoch zu einem - schlechten Wirkungsgrad und zu nicht weiter verarbeitbaren Abfällen. Dies soll durch die Erfindung verhindert werden.

Die Schwermetalle werden unmittelbar aus der sauren Lösung durch einen Komplexbildner, insbesondere aus der Dimethyldithiocarbamat-Gruppe, ausgefällt.

## Verfahren zum Entfernen von Schwermetallen aus Böden

Die Erfindung bezieht sich auf ein Verfahren gemäß dem Oberbegriff des Anspruches 1.

Bisher wurden derartige mit Schwermetallen belastete oder kontaminierte Böden häufig in einer Deponie abgelagert, was sehr aufwendig war und keine endgültige Beseitigung möglich machte. Oder sie wurden im Landschaftsbau oder gar in der Landwirtschaft eingesetzt, was wegen unzureichender Entgiftung gesundheitlich bedenklich und kostenmäßig sehr aufwendig war.

In Zusammenhang mit der Behandlung von Klärschlamm, beispielsweise aus der europäischen Patentanmeldung 82100349, oder ISWW Karlsruhe, Band 50, 1986, Seite 237, Müller G., ist die Behandlung von saurer Schwermetall-Lösung mit Schwefelwasserstoff als Fällungsmittel bekannt. Dies führt jedoch nicht nur zu kaum erträglichen Geruchsbelästigungen, auch der Wirkungsgrad ist sehr schlecht, da die entstehenden sehr leichten - schwebenden Flocken nur schwer von der Flüssigkeit abtrennbar sind Eine großtechnische Anwendung erscheint somit nicht zweckmäßig.

Bekannt ist weiterhin das Ausfällen von Lösungsmitteln durch neutrale oder basische Fällungsmittel. Dies ist jedoch bei den sauren Lösungsmitteln gemäß dem Oberbegriff des Anspruches 1 nicht möglich, eine vorherige Neutralisierung ist mit großem Aufwand und technischen zusätzlichen Problemen verbunden. Die genannten Verfahren werden somit nur in Zusammenhang mit der Dekontaminierung von Klärschlamm angewandt, siehe hierzu Metalloberfläche, 1973, Heft 5, Seiten 157 - 159, L. Hartinger, Ausfällen von Blei.

Die bisher bekannten Verfahren haben weitere gravierende Nachteile. So ist die erforderliche Neutralisierung, in der Regel mit Kalk, mit dem Entstehen riesiger Kalkhalden, den bei der Neutralisierung entstehenden Salzen, verbunden, die ein zusätzliches gewaltiges Umweltproblem darstellen.

Ein weiterer erheblicher Nachteil bisheriger Verfahren besteht darin, daß man die erhaltene Lösung, die nach dem Ausfällen der Schwermetalle zurückblieb, nicht wiederverwenden konnte. Schließlich konnte wegen des geringen Schwermetall-Anteiles bei den ausgefällten Schwermetallverbindungen auch dieses nicht wieder wirtschaftlich sinnvoll aufbereitet und verwendet werden. Bei den bekannten Verfahren erfolgt keine Trennung zwischen Lösungsmittel und den ausgefällten Schwermetallen, lediglich Wasser kann abgeführt werden.

Der Erfindung liegt die Aufgabe zugrunde, ein Verfahren gemäß dem Oberbegriff des Anspruches 1 so auszugestalten, daß eine unmittelbare Ausfällung der Schwermetalle aus dem Schwermetallbelasteten sauren Lösungsmittel stattfindet, wobei eine Wiederverwendung des Lösungsmittels und eine Wiederaufbereitung der erhaltenen Schwermetalle unter weitgehender Vermeidung von Abfall ermöglicht wird.

Die Aufgabe wird erfindungsgemäß durch die Merkmale des Kennzeichens des Anspruches 1 gelöst. Weitere Ausgestaltungen der Erfindung sind in den Unteransprüchen unter Schutz gestellt.

Praktisch kann die Behandlung des Schwermetall enthaltenden Bodens in Gegenstrom-Waschanlagen mit geeigneten Säuregemischen wie $HNO_3$ + $HCl$ + $H_2SO_4$ erfolgen, wobei Blei und sonstige Schwermetalle in saure Lösung gehen Die entstehenden Fest-Flüssig-Phasen werden durch Dekantieren und anschließendes Waschen voneinander getrennt. Die Festphase besteht dann aus dem gereinigten und entgifteten, allerdings noch angesäuerten Boden und kann nach Neutralisierung und nach Zufüh rung von organischen Wiederbelebungsmitteln mittels humöser Stoffe wieder dem übrigen Erdreich zugeführt werden. Nach der Behandlung selbst ist der Boden ja noch organisch tot.

Die Erfindung selbst setzt bei der Weiterbehandlung der zurückbleibenden Flüssigphase ein, welche die gelösten Schwermetalle noch enthält. Es stellte sich heraus, daß der Einsatz von Komplexbildnern ein Ausfällen von Schwermetall-Komplexverbindungen unmittelbar aus der vorhandenen sauren Lösung ermöglicht, und zwar mit hohem Wirkungsgrad und einer scharfen Trennung zwischen den ausgefällten Komplexverbindungen und der darüberliegenden leichteren Flüssigkeit. Besonders geeignet hierfür sind Komplexverbindungen der Dimethyldithiocarbamat-Gruppe.

Der nunmehr entstandene schwermetallhaltige Niederschlag wird durch Filtration, insbesondere Filterpressen, von der Flüssigkeit abgetrennt. Man erhält überraschenderweise beinahe wieder die gesamte urspünglich angewandte Lösungssäure, die nach einer gewissen Aufkonzentrierung wieder für die Bearbeitung weiterer kontaminierten Bodens einsetzbar ist.

Der mehrfach mit Wasser gewaschene und filtergepreßte schwermetallhaltige Niederschlag kann bis zu ca. 50 % Schwermetall, insbesondere Blei, in Form von anorganischen Schwermetallverbindungen, enthalten. Dieser hohe Anteil ermöglicht eine problemlose Wiederaufbereitung in entsprechenden Hütten. Das so entstandene Schwermetall, insbesondere Blei, ist dann als Werkblei oder Feinblei wieder einsetzbar.

Ein Ausführungsbeispiel der Erfindung ist in der Zeichnung dargestellt. Es zeigt:

Fig. 1 ein Gesamt-Anlagenschema

Fig. 2 einen Extraktionsapparat gemäß Fig 1

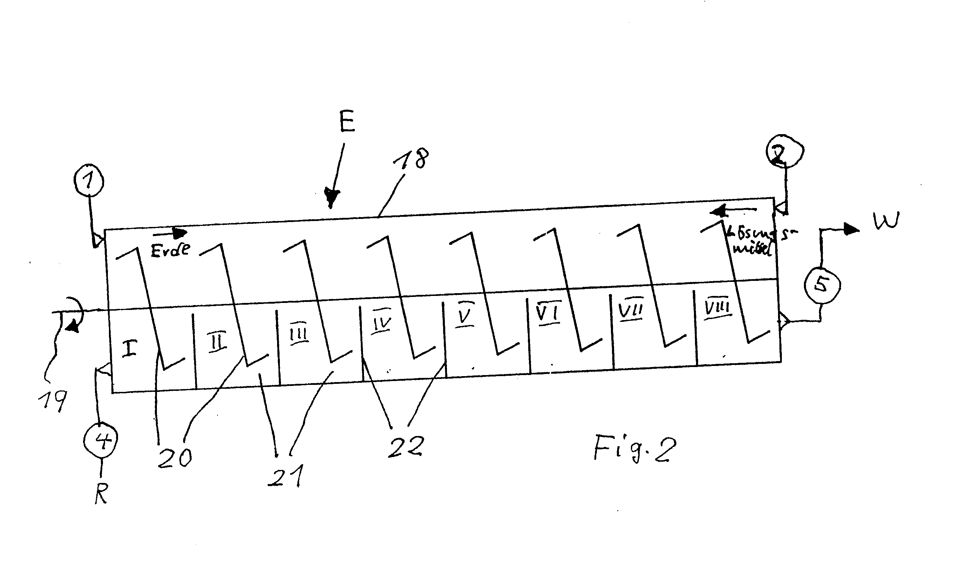

Die einzelnen Bezugsziffern stellen hier in der entsprechenden Reihenfolge die einzelnen Verfahrensschritte dar. Im ersten Schritt 1 wird mit Schwermetall verseuchte Erde an einer Stirnseite, in einem zweiten Schritt 2 an der anderen Stirnseite saures Lösungsmittel in einen Behälter E gegeben, und beides durch gegenläufige Bewegung miteinander vermischt. Hierbei wird die noch stark kontaminierte Erde mit bereits weitgehend mit gelöstem Schwermetall beladenem Lösungsmittel kontaktiert, während die weitgehend dekontaminierte Erde am anderen Ende des Extraktionsapparates mit noch unbeladenem Lösungsmittel in Berührung kommt. Entsprechend werden die Zwischenstufen (s. Fig. 2) durchlaufen. Auf diese Weise wird mit geringem Aufwand an Lösungsmittel eine weitgehende Extraktion der Schwermetalle erreicht, was zugleich eine möglichst hohe Konzentration im Eluat bedeutet. Dieses beladene Lösungsmittel läuft am linken Ende des Extraktionsapparates über. Im Verfahrensschritt 4 wird das Lösungsmittel mit den darin gelösten Schwermetallen, wie Blei und Cadmium, abgegossen und gelangt in eine Reaktionsstrecke R.

Im Verfahrensschritt 5 wird die dekontaminierte saure Erde in einem Waschapparat W einer Wäsche unterzogen, wobei im Verfahrensschritt 6 von der gegenüberliegenden Seite her Wasser zugeführt wird. Dieser ist ebenso wie der Extraktionsapparat E konstruiert und wird am entgegengesetzten Ende im Verfahrensschritt 6 mit Wasser beschickt. Auf diese Weise trifft die versäuerte Erde auf der Eintragsseite auf schon stark mit dem Lösungsmittel beladenes Wasser und kann dieses noch weiter beladen, so daß das Lösungsmittel in recht hoher Konzentration wiedergewonnen wird.

Im Verfahrensschritt 7 wird das wiedergewonnene Lösungsmittel einem Tank T zugeführt. Im Verfahrensschritt 8 wird die zurückgebliebene neutralisierte Erde aus dem Waschapparat W entfernt und in einem Verfahrensschritt 9 in einem Mischer M wiederaufbereitet. Die Wiederaufbereitung der nunmehr vorhandenen zwar neutralen, jedoch organisch noch toten Erde erfolgt hierbei durch Hinzugabe von Bodenverbesserern wie Humus, organische Lebewesen, Kalk etc. Als nächster Verfahrensschritt 10 erfolgt die Ablagerung der wieder verwendbaren Erde.

Nunmehr wird der zweite Gang dieses zweiteiligen Verfahrens beschrieben. Im Verfahrensschritt 4 kommt das saure beladene Lösungsmittel mit den darin gelösten Schwermetallen wie Blei und Cadmium in die Reaktionsstrecke R, wie oben beschrieben. Diesem wird im Verfahrensschritt 12 ein Fällungsmittel in Form eines Komplexbildners zugesetzt, der in saurer Lösung wirkt und mit den Schwermetallen feste Komplexverbindungen bildet. Im vorliegenden Falle wurde ein Komplexbildner aus der Dimethyldithiocarbamat-Gruppe eingesetzt. Die dadurch entstandene Fest-Flüssig-Phase wird in einem Verfahrensschritt 11 einem Abschneider A zugeführt, wo sich unter der Schwerkraft die ausgefällten Partikel absetzen. Das oben klar ablaufende Lösungsmittel wird im Verfahrensschritt 14 dem Vorratstank T zugeführt. Der abgesetzte - schwermetallhaltige Schlamm wird vom Boden des Abschneiders A abgezogen und in einem Filter F weiter konzentriert. Auf dem Filter F bildet sich ein schwermetallhaltiger Filterkuchen, insbesondere Blei, der eine so hohe Schwermetallkonzentration aufweist, daß er in Hüttenwerken zu wiederverwendbaren Schwermetallen einschließlich Feinblei aufbereitet werden kann.

Die durch das Filter F hindurchgehende Säure ist relativ rein und relativ hoch konzentriert. Es ist daher möglich und wirtschaftlich lohnend, diese Säure wieder aufzukonzentrieren. In einem Verfahrensschritt 17 wird diese gebrauchte Säure einem Tank T zugeführt, dem in einem weiteren Schritt 15 kontrolliert höher konzentrierte Säure zugeführt werden kann. Die aufkonzentrierte Säure ist somit wieder verwendbar, insbesondere für das Entfernen von Schwermetallen aus weiteren belasteten Böden, Schlämmen und dergleichen. Somit ist der Kreislauf für das Lösungsmittel geschlossen. Wenn nicht zu viel Erdalkalien vorliegen, eine Befeuchtung der Erde mit einer entsprechenden Menge Wasser erfolgt und wenig Wasser zum Waschen der Erde benötigt wird, kann auch das Volumen der Flüssigkeit konstant gehalten werden, so daß kein Entsorgungsproblem für die Überschüsse entsteht.

In Fig. 2 ist ein Extraktionsapparat E im Detail gezeigt. Der dort gezeigte Apparat ist im übrigen vom Aufbau im wesentlichen mit dem Waschapparat W gleich. Der in Fig. 2 gezeigte Extraktionsapparat E besteht im wesentlichen aus einem zylindrischen Behälter 18, dessen Achse eine drehbare angetriebene Welle 19 aufweist. An dieser Welle sind hintereinander eine Reihe von Z-förmigen schräggeneigten Rührarmen angeordnet, im Beispiel gemäß Fig. 2 acht an der Zahl, die sich mit der Welle 19 drehen. Im unteren Abschnitt des Behälters 18, somit unterhalb der Welle 19, sind sieben Trennwände 22 vorgesehen, so daß sich acht Einzelbehälter I - VIII ergeben, in die jeweils ein Z-förmiger Rührarm 20 eingreift. Während von links oben die mit Schwermetall belastete Erde eingefüllt wird, wird rechts oben, somit an der gegenüberliegenden Stirnseite des Behälters E, saures Lösungsmittel eingeführt. Durch die Drehbewegung und die Schräganordnung der Rührarme bewegt sich die kontaminierte Erde von links nach rechts, während sich das saure Lösungsmittel von rechts nach links bewegt, so daß eine innige Durchmischung erfolgt. Links unten wird das saure Lösungsmittel, in dem sich die Schwermetalle gelöst haben, im Verfahrensschritt 4 abgeführt, während die von Schwermetall befreite saure Erde im Verfahrensschritt 5 einem Waschbehälter W zugeführt wird.

Beispiel:

Mit einer Anordnung gemäß der einzigen Figur wurde das folgende Ausführungsbeispiel durchgeführt. Es wurde unter einem ehemaligen Abfallplatz, bei dem Bleiabfälle gelagert wurden, Boden entnommen. Die Blei-Kontamination betrug 18 Gramm pro Kilogramm trockene Erde.

In Unterversuchen wurden drei verschiedene Lösungsmittel, dessen Gewicht das Doppelte des Bodengewichtes betrug, beigemischt und das Extrakt in Form des Lösungsmittels einschließlich gelöstem Blei dekantiert, d. h. dürch Abgießen oder ähnliche Maßnahmen von der neutralisierten Erde entfernt:

Als Lösungsmittel verwendete Säuren:
  A) 0,1 molare Salzsäure.
  B) 0,4 molare Salzsäure,
  C) 0,4 molare Salzsäure mit 0,02 molarer Salpetersäure in einem derartigen Verhältnis vermischt, daß sich eine 0,42 molare Säure ergibt.    .

Bei dem Lösungsmittel A) konnte eine Extraktion des Schwermetalls Blei aus dem Boden von 25 %, bei B) eine Extraktion von 35 % und bei C eine Extraktion von 50 %, jeweils pro Extraktionsvorgang, erzielt werden. Das heißt beispielsweise, daß in letzterem Falle in einem einzigen Vorgang bereits 50 % der Schwermetalle aus der Erde entfernt werden konnten.

Für diesen Fall C) wurde nunmehr der Vorgang acht Mal wiederholt, wobei je 10 Minuten Verweildauer im Behälter E vorgesehen waren.

In der ersten Stufe wurden im Behälter E 100 Gramm trockene Erde mit einem Bleigehalt von 18 Gramm pro Kilogramm mit 200 Gramm Lösungsmittel, bestehend aus 50 % 0,4 molare Salzsäure und 50 % 0,02 molare Salpetersäure vermischt. Nach der ersten Stufe war das Lösungsmittel mit 4 Gramm Blei pro Liter angereichert, während der Bleigehalt im (trockenen) Boden nurmehr 9 Gramm pro Kilogramm betrug.

Nach Beendigung der achten Stufe lag der Bleigehalt bei 0,1 Gramm Blei pro trockener Erde, und der Bleigehalt des vom Behälter E abgegossenen Lösungsmittel-Extraktes betrug 0,005 Gramm Blei je Liter.

Bei jeder Durchgangs-Stufe wurde die bleihaltige Lösung in der Reaktionsstrecke R mit einer entsprechend berechneten Menge eines Fällungsmittels in Form eines Komplexbildners aus der Dimethyldithiocarbamat-Gruppe versetzt.

Um das Absetzen zu verbessern und zu beschleunigen, wurde nach einer zweckmäßigen Ausführung der Erfindung ein übliches Flockungsmittel zugesetzt. Das erhaltene Präzipitat wurde nunmehr einem geeigneten feinen Filter F zugeführt. Das erhaltene Filtrat in Form eines bleihaltigen Filterkuchens enthielt praktisch das gesamte extrahierte Blei, während das abgegossene Lösungsmittel nur noch 0,02 Gramm Blei je Liter enthielt. Die Säurekonzentration der aus dem Filter F abgegossenen Säure betrug noch 75 % des ursprünglichen Wertes. Sie wurde durch Zugabe einer entsprechenden höher konzentrierten Säure für eine Wiederverwendung, das heißt insbesondere dem erneuten Beimischen neuer verunreinigter Erde im Behälter E, aufkonzentriert, und zwar in einem Tank T.

Die durch acht Stufen gereinigte Erde, die noch eine Bleikonzentration von 0,1 Gramm pro Kilogramm trockener Erde enthielt, wurde nun ebenfalls in acht Stufen, das heißt acht Mal nacheinander, in einem Behälter, der gegebenenfalls der gleiche Behälter E sein kann, ausgewaschen, wobei den 100 Gramm ursprüngliche Erde je 100 Milliliter Wasser zugegeben wurden. Das Wasser wurde gegenläufig mit der Erde vermischt, im vorliegenden Falle in einer Schnecke, wo die Erde von unten nach oben transportiert und das Wasser von oben eingefüllt wurde und sich somit nach unten bewegte.

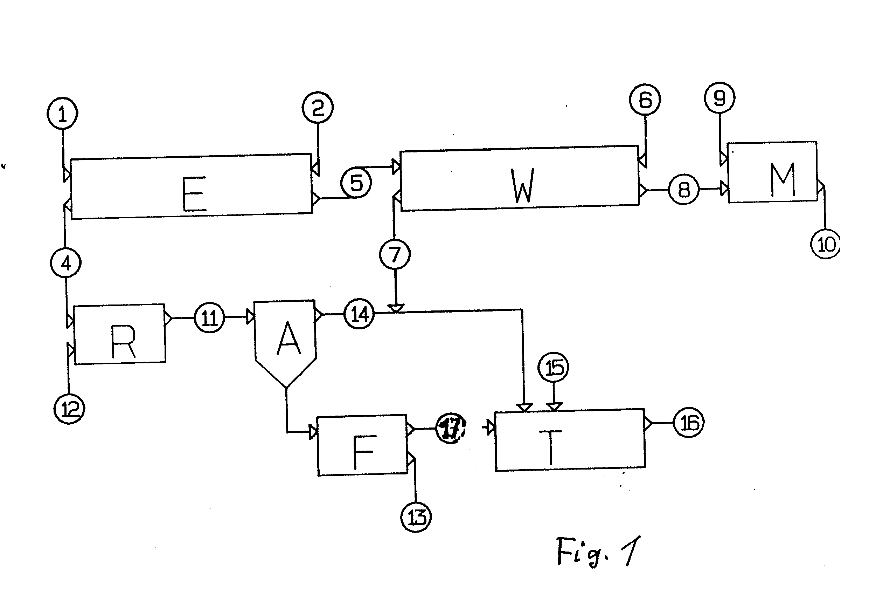

Das Waschwasser entzog der Erde soviel Säure, daß eine 0,3 molare Dünnsäure entstand (siehe Verfahrensschritt 7 in Figur 1), während die Erde nur noch schwach sauer reagierte.

Diese Dünnsäure kann aufkonzentriert und für weitere Verwendung, beispielsweise eine weitere Dekontaminierung von Böden, verwendet werden. Die Aufkonzentrierung kann im Tank T gemäß Figur 1 erfolgen, in dem auch die Aufkonzentrierung der gebrauchten Säure, die vom Filter F durchgelassen wurde, erfolgt.

Die so erhaltene neutralisierte Erde kann unmittelbar als Verfüllungsmaterial verwendet werden oder nach Mischung mit Düngekalk und Humus bepflanzt werden.

Es sei erwähnt, daß sich dieses Verfahren je nach Grad der Kontamination, Gehalt der Erde an Erdalkalien und Aufnahmefähigkeit für Wasser in einfacher Weise wechselnden Verhältnissen anpassen kann.

**Ansprüche**

1. Verfahren zum Entfernen von Schwermetallen wie Blei, Cadmium, Quecksilber aus Böden, Schlämmen und dergleichen, bei dem die mit Schwermetallen belastete Erde abgetragen und in Behälter gefüllt wird, anschließend saures Lösungsmittel hinzugegeben und mit der Erde vermischt wird, bei dem anschließend das Lösungsmittel einschließlich des darin gelösten Schwermetalles von der Erde entfernt wird und die zurückgebliebene, von Schwermetällen befreite, jedoch noch angesäuerte Erde entsäuert und somit für eine Wiederverwendung neutralisiert wird,

gekennzeichnet durch folgende Behandlungsschritte des Lösungsmittels mit den darin gelösten Schwermetallen:

a) Hinzugabe eines Fällungsmittels in Form eines Komplexbildners, der in saurer Lösung wirkt und feste Komplexverbindungen mit den Schwermetallen bildet.

b) Entfernen der entstandenen klaren Flüssigkeit von den ausgefällten Schwermetall-Komplexverbindungen,

c) vorzugsweise Aufkonzentrierung der Flüssigkeit für die Wiederverwendung, beispielsweise für die weitere Dekontaminierung,

d) vorzugsweise Wiederaufbereitung der ausgefällten Bleikomplexverbindung durch bekannte Verfahren.

2. Verfahren nach Anspruch 1, dadurch gekennzeichnet, daß Komplexbildner aus der Dimethyldithiocarbamat-Gruppe eingesetzt werden.

3. Verfahren nach Anspruch 1 oder 2, dadurch gekennzeichnet, daß als Lösungsmittel ein Gemisch von $HNO_3$ + $HCL$ + $H_2SO_4$ eingesetzt wird.

4. Verfahren nach einem der Ansprüche 1 bis 3, dadurch gekennzeichnet, daß die mit Schwermetallen kontaminierte Erde im Gegenstromverfahren mit dem Lösungsmittel vermischt wird, wobei im Behälter vorzugsweise eine schräg angeordnete rotierende Schnecke vorgesehen ist und wobei die kontaminierte Erde am unteren Ende der Schnecke eingefüllt und nach oben transportiert wird, während das Lösungsmittel am oberen Ende der Schnecke eingeführt wird.

5. Verfahren nach einem der Ansprüche 1 bis 4, dadurch gekennzeichnet, daß das Trennen des Lösungsmittels mit den gelösten Schwermetallen vom dekontaminierten Boden über Dekantieren und Waschen erfolgt.

6. Verfahren nach einem der Ansprüche 1 bis 5, dadurch gekennzeichnet, daß die Trennung des schwermetallhaltigen Niederschlages nach dem Ausfällen vom Lösungsmittel durch Filterpressen erfolgt.

7. Verfahren nach Anspruch 6, dadurch gekennzeichnet, daß der filterierte Niederschlag mehrmals mit Wasser vermischt und durch erneutes Filtern gewaschen wird.

Fig. 1

Fig. 2